# FASCICULE DE BREVET EUROPEEN

(11) **EP 3 868 550 B1**
(45) Date de publication et mention de la délivrance du brevet: **07.02.2024**
(21) Numéro de dépôt: 21168962.5
(22) Date de dépôt: 09.01.2017
(51) Int. Cl.: B30B 9/32

(54) **METHODE DE TRAVAIL POUR LE TRAITEMENT DE FERRAILLES SUR UN CHANTIER DE RECYCLAGE DE FERRAILLES ET PRESSE-CISAILLE OU PRESSE OU CISAILLE UTILISEE POUR CETTE METHODE**
ARBEITSMETHODE ZUR VERARBEITUNG VON ALTMETALL AUS EINER ALTMETALLRECYCLINGANLAGE UND SCHERENPRESSE, PRESSE ODER SCHERE, DIE FÜR DIESE METHODE VERWENDET WIRD
METHOD FOR THE TREATMENT OF SCRAP METAL ON A SCRAP METAL RECYCLING SITE AND PRESS-CUTTER OR PRESS OR CUTTER USED FOR THIS METHOD

(30) Priorité: 22.01.2016 BE 201605052
(43) Date de publication de la demande: 25.08.2021
(62) Demande divisionnaire de: 17703917.9
(73) Titulaire: Presses et Cisailles Lefort, 6041 Gosselies (BE)
(72) Inventeur: Lefort, Christian Yvon N., 1380 Lasne (BE)
(74) Mandataire: Gevers Patents

(56) Documents cités:
- EP-A1- 2 177 270
- JP-A- S5 639 814
- JP-A- S5 689 400
- JP-A- H01 197 099
- JP-A- H02 155 598
- JP-U- H0 281 795
- KR-B1- 101 144 823
- US-A- 3 730 078

## Description

L'invention concerne une méthode de travail pour le traitement de ferrailles sur un chantier de recyclage de ferrailles et un ensemble d'une presse-cisaille ou une presse ou cisaille et un engin de chargement utilisée pour cette méthode.

Dans ce qui suit le terme presse-cisaille couvrira aussi bien les presses de ferrailles, que les cisailles de ferrailles que la presse-cisaille proprement dit.

Une presse-cisaille à ferraille est destinée à couper et/ou compacter des déchets de métal de grande envergure, tels que ferrailles de ramassage, ferrailles de démolition ou similaires qui sont stockées sur un chantier de recyclage de ferraille dans des zones pourvues à cette fin.

Les ferrailles coupées et compactées sont temporairement rassemblées dans une zone du chantier proche de la presse-cisaille et séparée des zones où des ferrailles traitées.

Une presse-cisaille comprend d'une manière générale un bac de chargement pour recevoir une quantité de ferrailles à traiter et qui est pourvue d'une sortie sous forme d'un portique guillotine verticale avec des lames coupantes pour sectionner les ferrailles qui sont dégagées du bac à travers la sortie au moyen d'un poussoir hydraulique qui est ensuite rétracté pour recharger le bac vide avec une nouvelle quantité de ferraille à traiter. Le document EP 2 177 270 A1, en conformité avec le préambule de la revendication 1, divulgue une telle presse-cisaille.

Les ferrailles sont ainsi consécutivement traitées bac par bac. Le cycle de la presse-cisaille prend un certain temps pour effectuer le travail. En fin de cycle, la machine s'arrête et attend un nouveau chargement.

Les chantiers de ferrailles sont généralement équipés d'une presse-cisailles statique qui est généralement alimentée par un engin de chargement mobile, par exemple une grue équipée d'un grappin, d'un électro-aimant ou autre équipement pour aller chercher les ferrailles à traiter et de les déposer dans le bac.

Plusieurs déplacements de la grue sont nécessaires pour remplir suffisamment le bac de chargement de la presse-cisaille.

Pendant le cycle de la presse-cisaille la grue d'alimentation doit effectuer des allers-retours de plus en plus longs pour aller chercher la ferraille à traiter stockée sur le chantier.

Après chaque cycle de la presse-cisaille la grue est utilisée pour récupérer les ferrailles traitées à la sortie de la presse-cisaille et pour les déposer vers la zone de stockage prévue à cette fin, ce qui nécessite de nouveaux déplacements.

Les volumes de matière à traiter étant importants, les déplacements de la grue sont nombreux et de plus en plus longs puisque le stock de ferraille est de plus en plus éloigné de la presse-cisaille statique, ce qui implique des pertes de temps, une consommation importante de gasoil, des bruits dûs aux déplacements, les dangers dû aux déplacements, l'usure de la grue, etc.

Une presse-cisaille statique présente donc quelques inconvénients par son immobilité, notamment :
- que la ferraille à traiter doit venir à la machine ;
- que la ferraille traitée doit être dégagée et déplacée après traitement pour ne pas obstruer l'évacuation consécutive d'une nouvelle quantité de ferraille traitée de la presse-cisaille ;
- qu'aucune adaptation n'est possible à l'évolution géographique du chantier de ferraille ;
- que la presse-cisaille doit attendre que la ferraille à traiter arrive dès que le stock de cette ferraille à traiter est trop éloigné.

Il existe aussi des presses-cisailles tractées, mais ces presses-cisailles sont généralement utilisées comme presses-cisailles statiques puisque le convoi exceptionnel qu'une telle presse-cisaille tractée est contraignant, par ses dimensions et son poids, et présente l'inconvénient d'être très peu maniable et nécessite de grandes zones de manoeuvre et un engin de traction.

En réalité les presses-cisailles tractées sont déplaçables de chantier en chantier mais difficilement à l'intérieur d'un chantier.

Ces presses-cisailles tractées ont les mêmes inconvénients que les presses-cisailles, mais en surplus sont aussi confrontées avec les inconvénients suivants:
- l'obligation d'utiliser un tracteur pour semi-remorque ;
- que le tracteur doit être détaché lors du travail de la presse-cisaille pour des raisons évidentes de protection de la chute des ferrailles déplacées par la grue ;
- qu'il faut plusieurs minutes pour regonfler les circuits pneumatiques du tracteur avant tout déplacement du convoi ;
- qu'il faut replier les béquilles de stabilisation de la presse-cisaille avant tout déplacement du convoi formé par le tracteur et la presse-cisaille ;
- qu'il faut dégager le sol de toutes les ferrailles tombées lors du chargement de la presse-cisaille afin d'éviter la détérioration des pneumatiques, des circuits de freinage, de suspension et des câblages électriques avant tout déplacement du convoi ;
- qu'il faut arrêter le moteur principal de la presse-cisaille avant tout déplacement du convoi pour des raisons de sécurité.

Après chaque déplacement de la presse-cisaille tractée, on est confronté avec les mêmes inconvénients puisqu'à chaque fois il faut refaire toutes les opérations et manoeuvres inverses lors du nouveau positionnement de la presse-cisaille.

L'invention a pour but d'éviter un ou plusieurs de ces inconvénients susdits et de procurer une méthode de travail plus efficace pour traiter les ferrailles sur un chantier de récupération de ferraille en utilisant une presse-cisaille automotrice.

Ce but est atteint selon l'invention par un ensemble de presse-cisaille pour le traitement de ferrailles et engin de chargement, la presse-cisaille, étant munie d'un bac de remplissage pour recevoir une quantité de ferrailles à traiter et qui est pourvue d'une sortie sous forme d'un portique guillotine verticale avec des lames coupantes pour sectionner les ferrailles qui sont dégagées du bac à travers la sortie au moyen d'un poussoir hydraulique, la presse-cisaille pourvue d'un groupe hydraulique pour l'alimentation des vérins et moteurs hydrauliques du poussoir, des lames et de la presse, en utilisant un engin de chargement pour remplir le bac avec les ferrailles à traiter, caractérisée en ce que c'est une presse-cisaille automotrice, c'est-à-dire une presse-cisaille pourvue de ces propres moyens de déplacement et d'une mobilité autonome de façon à ce qu'elle est déplaçable à l'intérieur d'un chantier, permettant à l'opérateur de l'engin de chargement qui charge la presse-cisaille (1) de ferrailles à traiter, d'évoluer dans un chantier de ferrailles sans devoir faire de multiples déplacements de plus en plus longs, voir même de supprimer complètement ces déplacements, la presse-cisaille et l'engin de chargement étant deux machines qui puissent se déplacer simultanément, afin que la presse-cisaille automotrice évolue en même temps que l'engin de chargement qui l'alimente en ferrailles à traiter, les ferrailles traitées sont éjectées à l'arrière de la presse-cisaille et que celle-ci est déplacée vers l'avant, afin que les ferrailles éjectées ne gênent pas le déplacement de la presse-cisaille et de l'engin de chargement, à ce qu'elle est pourvue d'une commande à distance qui est utilisée par l'opérateur de l'engin de chargement pour commander les déplacements et l'opération de la presse-cisaille.

Ce but est aussi atteint selon l'invention par une méthode de travail pour le traitement des ferrailles stockées sur un chantier de récupération de ferrailles selon la revendication 8.

L'avantage de l'invention consiste en une possibilité plus rationnelle d'utiliser une presse-cisaille conventionnelle en la dotant d'une mobilité autonome permettant à l'opérateur de l'engin de chargement qui charge la presse-cisaille de ferrailles à traiter, d'évoluer dans un chantier de ferrailles sans devoir faire de multiples déplacements de plus en plus longs, voir même de supprimer complètement ces déplacements.

Le chantier de ferraille est organisé de tel sorte que le trajet qui doit être parcouru par l'ensemble de la presse-cisaille et de l'engin de chargement soit un trajet principalement rectiligne ou curviligne, ce qui nécessite les moindres déplacements et manoeuvres avec un gain de temps.

L'engin de chargement est de préférence un engin mobile de façon à ce que les deux machines, c'est-à-dire la presse-cisaille et l'engin de chargement puisse se déplacer simultanément pour éviter que les machines soient toujours proches l'une par rapport à l'autre, dans le but de minimaliser également les déplacements.

La presse-cisaille automotrice est pourvue d'une commande à distance qui est de préférence utilisée par l'opérateur de l'engin de chargement pour commander les déplacements et l'opération de la presse-cisaille.

L'opérateur pourra ainsi travailler seul de la manière la plus rationnelle en pouvant diminuer, voire supprimer, les déplacements de la grue.

La presse-cisaille comprend de préférence uniquement un seul moteur qui sert aussi bien pour l'opération de la presse-cisaille que pour l'opération des moyens de déplacement de la presse-cisaille. Ainsi on évite le coût pour un deuxième moteur pour la traction et la nécessité de prévoir de la place supplémentaire pour un tel moteur.

Le trajet parcouru par la presse-cisaille est de préférence parcouru avec la sortie de la presse-cisaille pour dégager les ferrailles traitée dirigée vers l'arrière, c'est-à-dire dans le sens opposé du sens trajet parcouru.

Ainsi les ferrailles traités sont laissés sur place sans qu'elles puissent gêner les déplacements de la presse-cisaille et en laissant les ferrailles traitées alignées le long de parcours rectiligne ou curviligne, ce qui rend plus facile le ramassage de ces ferrailles pour être transportées.

L'invention concerne aussi une presse-cisaille pour l'application de la méthode selon l'invention, s'agissant d'une presse-cisaille automotrice, c'est-à-dire d'une presse-cisaille pourvue de ces propres moyens de déplacement de façon à ce qu'elle est déplaçable à l'intérieur d'un chantier (14), les ferrailles traitées (5') sont éjectées à l'arrière de la presse-cisaille (1) et que celle-ci est déplacée vers l'avant.

Les avantages d'une presse-cisaille selon l'invention par rapport à une presse-cisaille statique ou tractée en combinaison avec un engin de chargement peuvent être résumés comme suit :
- la presse-cisaille automotrice évolue en même temps que la grue qui l'alimente en ferrailles à traiter ;
- les longs déplacements allers/retours de chargement sont fortement diminués voire supprimés puisque la presse-cisaille automotrice suit les déplacements de l'engin de chargement ;
- lié à la réduction des déplacements de l'engin de chargement :
   - moins d'usure ;
   - moins de bruit ;
   - moins de danger d'accidents ;
   - moins de pollution ;
   - économie de carburant ;
- gain de temps pour la presse-cisaille automotrice puisque :
   - la presse-cisaille ne doit pas attendre le chargement par l'engin de chargement ;
   - pas besoin de dégager la matière traitée qui sort de la presse-cisaille automotrice puisque la presse-cisaille automotrice peut avancer après chaque fin de cycle ;
   - la presse-cisaille automotrice peut-être mise au travail immédiatement dès l'arrivée sur site ;
- en raison du gain de temps pour la presse-cisaille :
   - moins de pollution pour la presse-cisaille ;
   - économie de carburant pour la presse-cisaille ;
   - meilleur rendement global ;
- augmentation d'un grand pourcentage du volume de stockage de ferrailles à traiter sur le chantier car la zone de manoeuvre de l'engin de chargement et de la presse-cisaille automotrice est réduite.

La presse-cisaille est de préférence munie de chenilles de traction pour son déplacement, ce qui donne une grande maniabilité de la presse-cisaille automotrice car possibilité de rotation sur place sur 360°, permettant une zone de manoeuvre réduite et donc augmentation du volume de stockage de ferrailles.

Une presse-cisaille sur chenilles peut d'ailleurs évoluer sur des sites accidentés.

La longueur totale de la presse-cisaille automotrice est aussi fortement diminuée par rapport à une presse-cisaille statique ou tractée.

La presse-cisaille est de préférence dimensionnée pour être transportée sur la route sur une remorque porte engins. Beaucoup de ces avantages sont aussi vrais pour un engin de chargement statique comme la superstructure d'une grue qui est montée d'une manière rotative sur une colonne statique.

Pour plus de clarté, un exemple de réalisation d'une presse-cisaille à ferraille selon l'invention est décrite ci-après à titre illustratif et non restrictif, référence étant faite aux dessins annexés dans lesquels:
La figure 1 est une vue latérale schématique d'une cisaille à ferraille selon l'état de l'art dans une situation de fonctionnement normal;
la figure 2 montre la cisaille de la figure 1 en état de fonctionnement avec évacuation des ferrailles traitées;
la figure 3 montre l'organisation d'un chantier classique de récupération de ferrailles avec un presse-cisaille statique comme celle de la figure 1 ;
la figure 4 est une vue latérale comme celle de la figure 1 mais pour une presse-cisaille automotrice selon l'invention ;
la figure 5 est une vue en élévation suivant la flèche F5 dans la figure 4;
la figure 6 est une illustration de l'organisation d'un chantier de ferrailles permettant de pratiquer la méthode de travail selon l'invention avec une presse-cisaille automotrice selon les figures 4 et 5.

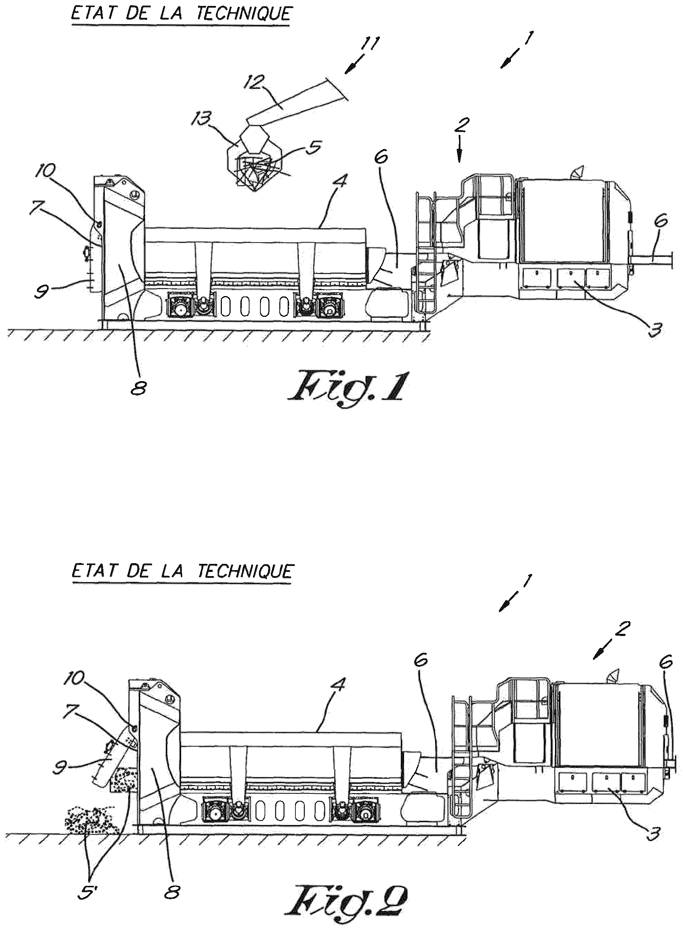

La presse-cisaille à ferraille statique 1 représentée dans la figure 1 comprend une cabine de commande 2; un groupe hydraulique 3; un bac 4 pour recevoir les ferrailles à couper 5; un poussoir horizontal 6 pour dégager les ferrailles 5 du bac 4 à travers une sortie 7 qui est formée par un portique 8 qui, d'une manière connue, est muni de lames coupantes et/ou d'une presse non représentées pour couper et comprimer les ferrailles 5 avant d'être dégagées du bac par la sortie 7 qui est couverte par une trappe 9 de protection pivotable librement autour de son axe 10.

Le bac de la presse-cisaille 1 est rempli au moyen d'un engin mobile 11 du type grue dont uniquement le bras 12 est montré dans la figure 1 avec à son bout un grappin 13 pour prendre les ferrailles à traiter 5 et de les déposer dans le bac 4, comme illustré dans la figure 1.

La presse-cisaille 1 est une presse-cisaille classique statique, c'est-à-dire immobile, qui est placée à un endroit fixe du chantier 14.

Le chantier 14 est accessible par un accès 15 pour l'approvisionnement des ferrailles à traiter 5, lequel fait aussi office de sortie pour l'évacuation des ferrailles traitées 5'.

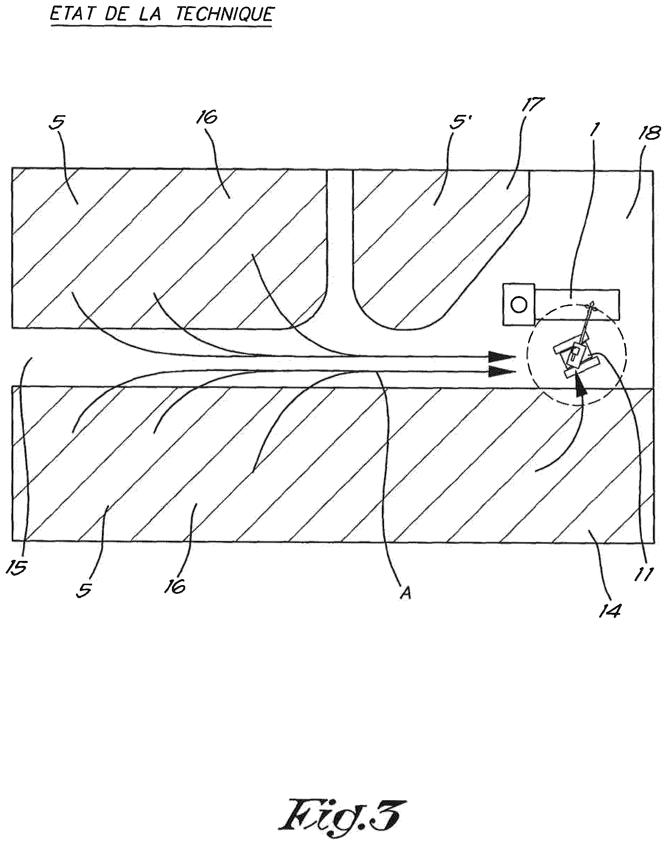

Le chantier 14 est organisé d'une manière classique comme représenté dans la figure 3 avec des zones de stockage 16 pour les ferrailles à traiter 5 et en zones de stockage 17 pour les ferrailles traitées 5' par la presse-cisaille 1.

Entre les zones 16 et 17 se trouvent des chemins et zones de manoeuvre 18 dans lesquelles l'engin de chargement 11 peut manoeuvrer pour aller chercher les ferrailles 5 dans les zones 16 pour les déposer dans le bac 4 et pour récupérer les ferrailles traitées 5' à la sortie 7 de la presse-cisaille pour les déposer dans les zones 17 et pour donner accès aux camions et remorques.

Les trajets parcourus par l'engin de chargement 11 sont indiqués par les flèches A, illustrant que ces trajets A deviennent de plus en plus longs au fur et à mesure que les ferrailles 5 sont traitées.

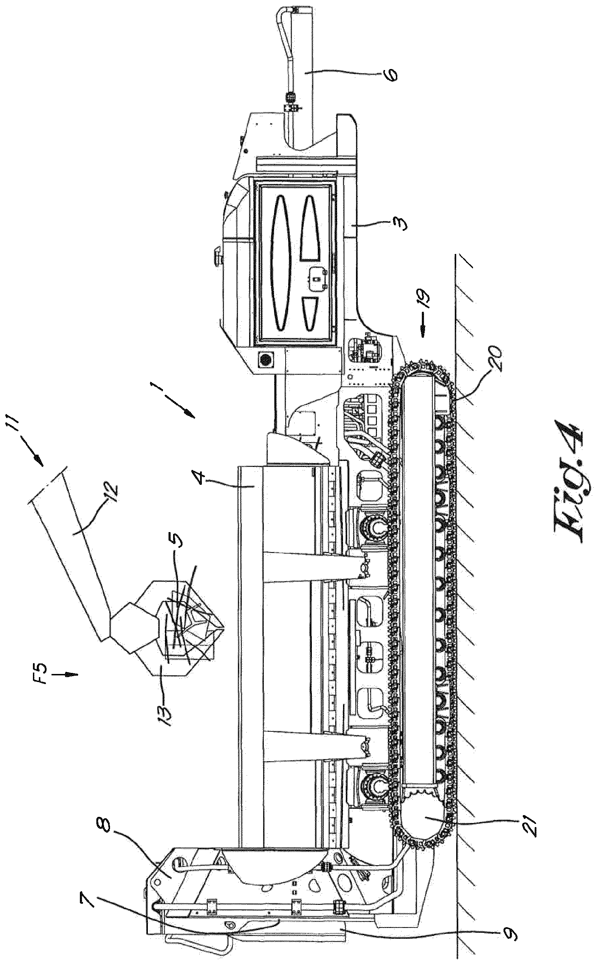

La figure 4 montre un exemple d'une presse-cisaille 1 selon l'invention, qui, dans le cas représenté est une presse-cisaille automotrice 1 équipée de moyens de déplacements et de traction 19 sous forme d'un train de chenilles avec deux chenilles 20, chaque chenille 20 pouvant être entraînée individuellement par son propre moteur hydraulique 21, permettant ainsi de faire tourner la presse-cisaille sur place.

La presse-cisaille 1 selon l'invention est d'une façon analogue à la presse-cisaille 1 stationnaire de la figure 1 équipée d'un bac de remplissage 4, d'un poussoir 6, d'un portique 8 avec lames coupantes et presse et avec une sortie 7 fermée par une trappe de protection 9 pivotable.

La presse-cisaille 1 est pourvue d'un groupe hydraulique 3, de préférence avec un seul moteur thermique ou électrique, pour l'alimentation des vérins et moteurs hydrauliques du poussoir 6, des lames et de la presse, ainsi que les moteurs hydrauliques 21 du train de chenilles 20 et éventuellement d'autres fonctions hydrauliques.

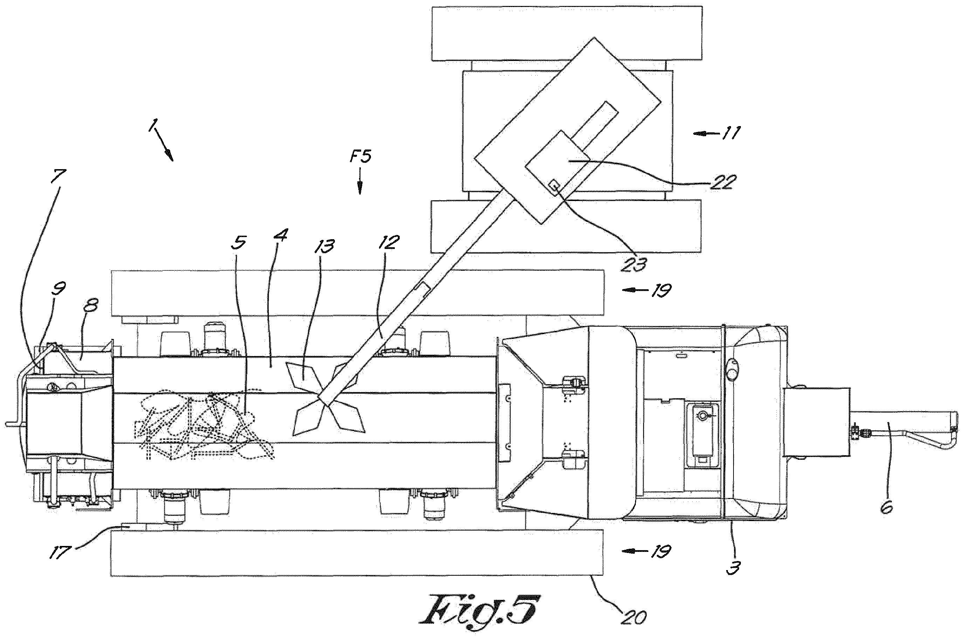

Le chargement de la presse-cisaille peut se faire au moyen d'un engin de chargement 11 comme illustré dans la figure 5, par exemple avec une grue à chenilles comme engin de chargement 11, équipé de préférence avec une cabine 22 surélevé pour l'opérateur de l'engin 11, afin d'avoir une bonne vue sur le chargement de la presse-cisaille.

La presse-cisaille est pourvue d'une commande à distance 23 pour les fonctions presse, cisaille et traction de la presse cisaille, commande qui est montée dans la cabine 22 de l'engin de chargement 11 ou que l'opérateur peut amener dans sa cabine 22 de façon à pouvoir contrôler les opérations de la presse-cisaille 1 sans devoir sortir de sa cabine 22 et de déplacer les deux machines 1 et 11 pour rester à proximité l'une de l'autre pendant le chargement.

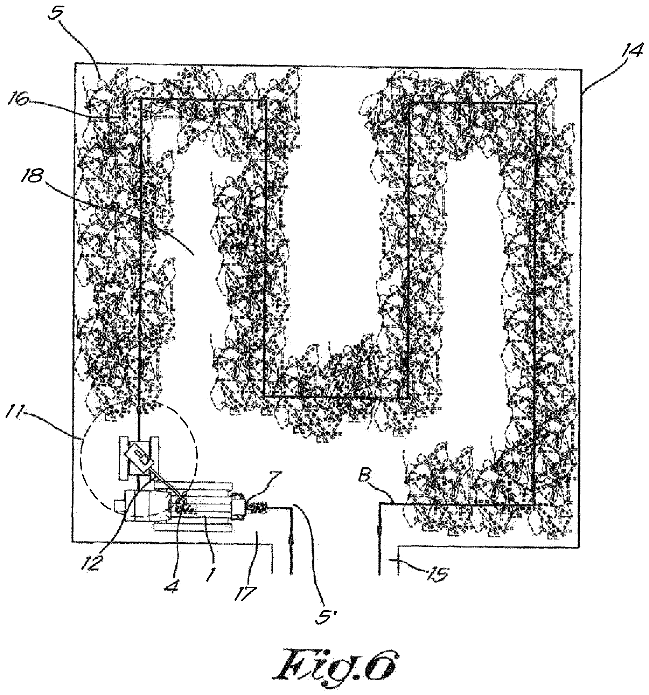

Dans le cas de l'invention le chantier 14 est organisé comme représenté dans la figure 6, qui montre que les ferrailles à traiter 5 sont entassées dans une zone 16 le long d'un trajet curviligne qui est indiqué par B et qui est suivi par l'ensemble de la presse-cisaille 1 et de l'engin de chargement lors du traitement cyclique des ferrailles.

Dans un premier temps la presse-cisaille 1 est positionnée au début de la zone 16 curviligne avec l'engin de chargement à proximité pour prendre les ferrailles à traiter 5 et de remplir de bac 4 de la presse-cisaille 1.

La presse-cisaille 1 est ensuite mise en marche pour effectuer un cycle te traitement pour couper et comprimer le contenu du bac 4 qui, à la fin du cycle de la presse-cisaille 1, est évacué par la sortie à l'arrière de la presse-cisaille 1.

Puis, la presse-cisaille 1 et l'engin 11 sont déplacés le long de la zone 16 pour un nouveau remplissage et un nouveau cycle de la presse-cisaille 1 pour couper et compacter les ferrailles.

Puisque les ferrailles traitées sont éjectées à l'arrière de la presse-cisaille et que celle-ci est déplacée vers l'avant, les ferrailles éjectées ne gênent pas le déplacement de la presse-cisaille 1 et de l'engin de chargement 11.

Les ferrailles traitées 5' qui sont dégagées de la presse-cisaille 1 restent sur place le long du trajet B qui est maintenant dégagé de ferrailles, permettant un accès facile pour être chargées sur camions.

Le trajet B est de préférence un trajet bouclé avec son point de départ et sa fin proches de l'accès 15.

Pendant que les deux machines 1 et 11 suivent le trajet vers la fin de trajet B, une nouvelle quantité de ferrailles à traiter peut être déposée le long de la zone 16 dégagée de façon à ce que quand les machines arrivent à la fin du boucle B, il peuvent attaquer la nouvelle quantité de ferraille sans attendre.

Il est clair que les moyens de déplacement 19 de la presse-cisaille 1 ne doivent pas nécessairement être réalisés sous forme de chenilles, mais que par exemple une presse-cisaille 1 automotrice sur pneus convient également pour l'invention.

Sur certains chantiers, l'engin de chargement est une machine immobile, par exemple sous forme d'une tourelle d'une grue montée sur colonne et pouvant prendre les ferrailles tout autour du fait que la tourelle peut tourner sur 360° sur la colonne.

Une presse-cisaille automotrice selon l'invention a l'avantage de pouvoir limiter les mouvements de la tourelle et des équipements de la grue dans un secteur où les ferrailles sont stockées autour de la colonne et de permettre entretemps de renouveler le stock épuisé à un autre endroit où la presse-cisaille vient de passer.

Il est évident que l'invention n'est nullement limitée aux exemples décrits ci-avant mais que de nombreuses modifications peuvent être apportées à la cisaille de ferraille décrite ci-avant sans sortir du cadre de l'invention telle que définie dans les revendications suivantes.

## Revendications

1. Ensemble de :
- une presse-cisaille (1) pour le traitement de ferrailles (5), et
- un engin de chargement (11),
la presse-cisaille (1) étant munie :
- d'un bac de remplissage (4) pour recevoir une quantité de ferrailles (5) à traiter,
- d'une sortie (7) sous forme d'un portique guillotine verticale (8) avec des lames coupantes pour sectionner les ferrailles (5) qui sont dégagées du bac (4) à travers la sortie au moyen d'un poussoir hydraulique (6), et
- d'un groupe hydraulique (3) pour l'alimentation des vérins et moteurs hydrauliques du poussoir (6), des lames et de la presse ;
l'engin de chargement (11) étant apte à remplir ledit bac (4) avec les ferrailles à traiter (5),
**caractérisé en ce que :**
- la presse-cisaille (1) est automotrice, c'est-à-dire qu'elle est pourvue de ses propres moyens de déplacement (19) et d'une mobilité autonome de sorte qu'elle est déplaçable à l'intérieur d'un chantier (14), permettant à un opérateur de l'engin de chargement (11) qui charge la presse-cisaille (1) de ferrailles à traiter (5), d'évoluer dans un chantier de ferrailles sans devoir faire de multiples déplacements de plus en plus longs, voire même de supprimer complètement ces déplacements,
- la presse-cisaille (1) et l'engin de chargement (11) sont deux machines aptes à se déplacer simultanément, afin que la presse-cisaille automotrice (1) évolue en même temps que l'engin de chargement (11) qui l'alimente en ferrailles à traiter (5),
- la presse-cisaille (1) est configurée pour éjecter les ferrailles traitées (5') à l'arrière et pour se déplacer vers l'avant, afin que les ferrailles éjectées ne gênent pas le déplacement de la presse-cisaille (1) et de l'engin de chargement (11), et
- la presse-cisaille (1) est pourvue d'une commande à distance (23) pour commander les déplacements et l'opération de la presse-cisaille (1).

2. Ensemble selon la revendication 1, **caractérisé en ce que** la presse-cisaille (1) et l'engin de chargement (11) sont séparés spatialement.

3. Ensemble selon la revendication 1 ou 2, **caractérisé en ce que** les moyens de déplacement (19) comprennent des chenilles de traction (20) ou des roues avec lesquelles la presse-cisaille (1) repose par terre.

4. Ensemble selon la revendication 3, **caractérisé en ce que** la presse-cisaille (1) est équipée de moyens de déplacements et de traction (19) sous forme d'un train de chenilles avec deux chenilles (20), chaque chenille (20) pouvant être entraînée individuellement par son propre moteur hydraulique (21), permettant ainsi de faire tourner la presse-cisaille sur place.

5. Ensemble selon la revendication 4, **caractérisé en ce que** la commande à distance (23) convient pour les fonctions presse, cisaille et traction de la presse-cisaille (1), et est montée dans une cabine (22) de l'engin de chargement (11) ou peut être amenée dans la cabine (22) par l'opérateur, de façon à pouvoir contrôler les opérations de la presse-cisaille (1) sans devoir sortir de la cabine (22) et déplacer les deux machines (1) et (11) pour rester à proximité l'une de l'autre pendant le chargement.

6. Ensemble selon l'une quelconque des revendications 1 à 5, **caractérisé en ce que** l'engin de chargement (11) est une grue à chenilles.

7. Ensemble selon l'une quelconque des revendications 1 à 6, **caractérisé en ce que** la presse-cisaille est dimensionnée de façon à être transportable sur route sur une remorque porte engins.

8. Méthode de travail pour le traitement de ferrailles stockées (5) sur un chantier (14) de récupération de ferrailles en utilisant un ensemble selon l'une quelconque des revendications 1 à 7, dans laquelle la commande à distance (23) est utilisée par l'opérateur de l'engin de chargement (11) pour commander les déplacements et l'opération de la presse-cisaille (1) au besoin,
la méthode comprenant les étapes suivantes :
- prévoir une zone de stockage (16) avec les ferrailles à traiter (5);
- procéder cycliquement au :
o déplacement de la presse-cisaille (1) dans la zone de stockage ou le long de la zone de stockage (16) dans la portée de l'engin de chargement (11);
o remplissage du bac (4) de la presse-cisaille (1) avec les ferrailles à traiter (5) en utilisant l'engin de chargement (11) ;
o faire fonctionner la presse-cisaille (1) pour traiter les ferrailles (5) chargées dans le bac (4) et pour dégager la ferraille traitée (5') par la sortie (7);
o déplacement de la presse-cisaille (1) pour le traitement d'un prochain tas de ferrailles à traiter (5) en laissant sur place les ferrailles traitées (5') dégagées du bac (4).

9. Méthode selon la revendication 8, **caractérisée en ce que** le chantier (14) est organisé tel que les ferrailles à traiter (5) sont entassées dans la zone de stockage (16) le long d'un trajet curviligne (B) qui est suivi par la presse-cisaille (1) et de l'engin de chargement (11) lors du traitement cyclique des ferrailles, la presse-cisaille (1) se déplaçant vers l'avant alors que la sortie (7) est dirigée vers l'arrière, et **en ce que** :
a) dans un premier temps, la presse-cisaille (1) est positionnée au début du trajet curviligne (B) avec l'engin de chargement (11) à proximité pour prendre les ferrailles à traiter (5) et de remplir de bac (4) de la presse-cisaille (1) ;
b) la presse-cisaille (1) est ensuite mise en marche pour effectuer un cycle de traitement pour couper et comprimer le contenu du bac (4) qui, à la fin du cycle de la presse-cisaille (1), est évacué par la sortie à l'arrière de la presse-cisaille (1) ;
c) puis, la presse-cisaille (1) et l'engin de chargement (11) sont déplacés le long du trajet curviligne (B) pour un nouveau remplissage et un nouveau cycle de la presse-cisaille (1) pour couper et compacter les ferrailles.

10. Méthode selon la revendication 8 ou 9, **caractérisée en ce que** le trajet curviligne (B) est parcouru par la presse-cisaille (1) d'un point de départ proche d'un accès (15) au chantier (14) à un point d'arrivé proche de cet accès (15).

11. Méthode selon l'une quelconque des revendications 8 à 10, **caractérisée en ce que** la commande à distance (23) est utilisée par l'opérateur de l'engin de chargement (11) pour déplacer la presse-cisaille (1) après chaque cycle de traitement de la presse-cisaille (1) afin de pouvoir commencer le chargement de la presse-cisaille (1) avec une nouvelle quantité de ferrailles (5) à traiter pour un nouveau cycle de la presse-cisaille (1).

12. Méthode selon l'une quelconque des revendications 8 à 11, **caractérisée en ce que** la commande à distance (23) est utilisée par l'opérateur de l'engin de chargement (11) pour démarrer et arrêter l'opération de la presse-cisaille (1).

13. Méthode selon l'une quelconque des revendications 8 à 12, **caractérisée en ce que** l'opérateur travaille seul.

14. Méthode selon l'une quelconque des revendications 8 à 13, dans laquelle l'opérateur travaille depuis une cabine (22) surélevée de l'engin de chargement (11), de sorte qu'il a vue sur le chargement de la presse-cisaille (1).

15. Méthode selon la revendication 14, dans laquelle la commande à distance (23) est montée ou amenée dans la cabine (22), de sorte que l'opérateur contrôle les opérations de la presse-cisaille (1) et déplace les deux machines (1) et (11) pour rester à proximité l'une de l'autre pendant le chargement.

## Patentansprüche

1. Anordnung aus:
- eine Scherpresse (1) für das Bearbeiten von Metallschrott (5), und
- einem Ladegerät (11),
wobei die Scherpresse (1) mit Folgendem ausgestattet ist:
-- einer Füllwanne (4), um eine Menge an zu bearbeitendem Metallschrott (5) aufzunehmen;
- einem Ausgang (7) in Form eines vertikalen Fallrahmens (8) mit schneidenden Klingen, um den Metallschrott (5), der mittels eines hydraulischen Stößels (6) durch den Ausgang aus der Wanne (4) abgegeben wird, zu durchtrennen, und
- einer Hydraulikgruppe (3), um Antriebe und Hydraulikmotoren des Stößels (6), Klingen und die Presse zu versorgen,
wobei das Ladegerät (11) geeignet ist, die Wanne (4) mit zu bearbeitendem Metallschrott (5) zu füllen,
**dadurch gekennzeichnet, dass**
- die Scherpresse (1) selbsttreibend ist, das heißt, dass sie so mit ihren eigenen Bewegungsmitteln (19) und einer autonomen Mobilität versehen ist, dass sie innerhalb einer Recyclingstelle (14) bewegbar ist, wodurch einem Bediener des Ladegeräts (11), der die Scherpresse (1) mit zu bearbeitendem Metallschrott (5) lädt, erlaubt wird, in einer Recyclingstelle zu bewegen, ohne mehrfache zunehmend länger werdende Bewegungen machen zu müssen, diese Bewegungen sogar vollständig wegzulassen,
- die Scherpresse (1) und das Ladegerät (11) zwei Maschinen sind, die geeignet sind, gleichzeitig bewegt zu werden, damit die selbsttreibende Scherpresse (1) zur gleichen Zeit bewegt wird wie das Ladegerät (11), das sie mit zu bearbeitendem Metallschrott (5) versorgt,
- die Scherpresse (1) konfiguriert ist, um den bearbeiteten Metallschrott (5') auf der Hinterseite auszugeben und um sich nach vorne zu bewegen, damit der ausgegebene Metallschrott die Bewegung der Scherpresse (1) und des Ladegeräts (11) nicht hindert, und
- die Scherpresse (1) mit einer Fernsteuerung (23) versehen ist, um die Bewegungen und den Betrieb der Scherpresse (1) zu steuern.

2. Anordnung nach Anspruch 1, **dadurch gekennzeichnet, dass** die Scherpresse (1) und das Ladegerät (11) räumlich getrennt sind.

3. Anordnung nach Anspruch 1 oder 2, **dadurch gekennzeichnet, dass** die Bewegungsmittel (19) Raupenzüge (20) oder Räder umfassen, mit denen die Scherpresse (1) auf dem Boden ruht.

4. Anordnung nach Anspruch 3, **dadurch gekennzeichnet, dass** die Scherpresse (1) mit Bewegungs- und Zugmitteln (19) in Form eines Raupenzugs mit zwei Raupen (20) ausgerüstet ist, wobei jede Raupe (20) über ihren eigenen Hydraulikmotor (21) einzeln angetrieben werden kann, wodurch ermöglicht wird, die Scherpresse stationär zu drehen.

5. Anordnung nach Anspruch 4, **dadurch gekennzeichnet, dass** die Fernsteuerung (23) für die Funktionen Presse, Schere und Zug der Scherpresse (1) angepasst ist und in einer Kabine (22) des Ladegeräts (11) montiert ist oder von dem Bediener in die Kabine (22) genommen werden kann, um die Betriebe der Scherpresse (1) steuern zu können, ohne die Kabine (22) verlassen zu müssen, und die zwei Maschinen (1) und (11) so zu bewegen, dass sie während des Ladens nahe beieinander bleiben.

6. Anordnung nach einem der Ansprüche 1 bis 5, **dadurch gekennzeichnet, dass** das Ladegerät (11) ein Raupenzug ist.

7. Anordnung nach einem der Ansprüche 1 bis 6, **dadurch gekennzeichnet, dass** die Scherpresse so dimensioniert ist, dass sie auf der Straße auf einem Maschinenträgeranhänger transportierbar ist.

8. Arbeitsverfahren zum Bearbeiten von gelagertem Metallschrott (5) auf einer Metallschrottrecyclingstelle (14) unter Verwendung einer Anordnung nach einem der Ansprüche 1 bis 7, wobei der Fernsteuerung (23) von dem Bediener des Ladegeräts (11) verwendet wird, um die Bewegungen und den Betrieb der Scherpresse (1) nach Bedarf zu steuern,
wobei das Verfahren die folgenden Schritte umfasst:
- Vorsehen eines Lagerbereichs (16) mit dem zu bearbeitenden Metallschrott (5);
- zyklisches Vornehmen von:
- Bewegen der Scherpresse (1) im Lagerbereich oder entlang des Lagerbereichs (16) in der Reichweite des Ladegeräts (11);
- Füllen der Wanne (4) der Scherpresse (1) mit dem zu bearbeitenden Metallschrott (5) unter Verwendung des Ladegeräts (11);
- Betreiben der Scherpresse (1), um den in der Wanne (4) geladenen Metallschrott (5) zu bearbeiten und um den bearbeiteten Metallschrott (5') durch den Ausgang (7) abzugeben;
- Bewegen der Scherpresse (1) zum Bearbeiten eines nächsten zu bearbeitenden Metallschrottstapels (5), wobei der aus der Wanne (4) abgegebene bearbeitete Metallschrott (5') an Ort und Stelle gelassen wird.

9. Verfahren nach Anspruch 8, **dadurch gekennzeichnet, dass** die Recylingstelle (14) so organisiert ist, dass der zu bearbeitende Metallschrott (5) in dem Lagerbereich (16) entlang einer krummlinigen Strecke (B) gestapelt wird, dem die Scherpresse (1) und das Ladegerät (11) bei der zyklischen Bearbeitung des Metallschrotts folgen, wobei die Scherpresse (1) sich nach vorne bewegt, während der Ausgang (7) zur Hinterseite geführt wird, und dadurch, dass:
a) die Scherpresse (1) zunächst am Anfang der krummlinigen Strecke (B) positioniert wird, mit dem Ladegerät (11) in der Nähe, um den zu bearbeitenden Metallschrott (5) zu nehmen und die Wanne (4) der Scherpresse (1) zu füllen;
b) die Scherpresse (1) dann hochgefahren wird, um einen Bearbeitungszyklus durchzuführen, um den Inhalt der Wanne (4), der am Ende des Zyklus der Scherpresse (1) durch den Ausgang auf der Hinterseite der Scherpresse (1) abgeführt wird, zu schneiden und zu komprimieren;
c) die Scherpresse (1) und das Ladegerät (11) dann für ein neues Laden und einen neuen Zyklus der Scherpresse (1) zum Schneiden und Komprimieren des Metallschrotts entlang der krummlinigen Strecke (B) bewegt werden.

10. Verfahren nach Anspruch 8 oder 9, **dadurch gekennzeichnet, dass** die krummlinige Strecke (B) von der Scherpresse (1) von einem Anfangspunkt in der Nähe eines Zugangs (15) zur Recylingstelle (14) bis zu einem Ankunftspunkt in der Nähe dieses Zugangs (15) durchlaufen wird.

11. Verfahren nach einem der Ansprüche 8 bis 10, **dadurch gekennzeichnet, dass** die Fernsteuerung (23) von dem Bediener des Ladegeräts (11) zum Bewegen der Scherpresse (1) nach jedem Bearbeitungszyklus der Scherpresse (1) verwendet wird, um das Laden der Scherpresse (1) mit einer neuen Menge an zu bearbeitendem Metallschrott (5) für einen neuen Zyklus der Scherpresse (1) starten zu können.

12. Verfahren nach einem der Ansprüche 8 bis 11, **dadurch gekennzeichnet, dass** die Fernsteuerung (23) von dem Bediener des Ladegeräts (11) zum Starten und Unterbrechen des Betriebs der Scherpresse (1) verwendet wird.

13. Verfahren nach einem der Ansprüche 8 bis 12, **dadurch gekennzeichnet, dass** der Bediener allein arbeitet.

14. Verfahren nach einem der Ansprüche 8 bis 13, wobei der Bediener von einer hochliegenden Kabine (22) des Ladegeräts (11) aus arbeitet, damit er eine gute Sicht auf das Laden der Scherpresse (1) hat.

15. Verfahren nach Anspruch 14, wobei die Fernsteuerung (23) in der Kabine (22) montiert ist oder in diese genommen wird, damit der Bediener die Betriebe der Scherpresse (1) steuert und die zwei Maschinen (1) und (11) bewegt, sodass sie während des Ladens nahe beieinander bleiben.

## Claims

1. Set of:
- a shear press (1) for processing scrap metal (5), and
- a filling vehicle (11),
the shear press (1) being provided with:
- a filling tray (4) for receiving a quantity of scrap metal (5) to be processed,
- an outlet (7) in the form of a vertical guillotine gate (8) with cutting blades for cutting through the scrap metal (5) which are released from the tray (4) through the outlet by means of a hydraulic tappet (6), and
- a hydraulic unit (3) for the supply of actuators and hydraulic motors of the tappet (6), the blades and the press;
the filling vehicle (11) being able to fill said tray (4) with the scrap metal (5) to be processed,
**characterized in that:**
- the shear press (1) is self-powered, i.e. that it is provided with its own movement means (19) and an autonomous mobility such that it is movable inside a site (14), enabling an operator of the filling vehicle (11) who fills the shear press (1) with scrap metal (5) to be processed, to move around a scrap metal site, without needing to make multiple longer and longer movements, even completely removing these movements,
- the shear press (1) and the filling vehicle (11) are two machines capable of moving simultaneously, such that the self-powered shear press (1) moves at the same time as the filling vehicle (11) which supplies it with scrap metal (5) to be processed,
- the shear press (1) is configured to eject the processed scrap metal (5') at the rear and to move to the front, such that the scrap metal ejected does not impede the movement of the shear press (1) and of the filling vehicle (11), and
- the shear press (1) is provided with a remote control (23) to control the movements and the operation of the shear press (1).

2. Set according to claim 1, **characterized in that** the shear press (1) and the filling vehicle (11) are spatially separated.

3. Set according to claim 1 or 2, **characterized in that** the movement means (19) comprise crawlers (20) or wheels with which the shear press (1) rests on the floor.

4. Set according to claim 3, **characterized in that** the shear press (1) is equipped with movement and crawling means (19) in the form of a crawler track with two crawlers (20), each crawler (20) being able to be individually driven by its own hydraulic motor (21), thus making it possible to make the shear press rotated onsite.

5. Set according to claim 4, **characterized in that** the remote control (23) is suitable for press, shearing and crawling functions of the shear press (1), and is mounted in a cabin (22) of the filling vehicle (11) or can be brought into the cabin (22) by the operator, so as to be able to control the operations of the shear press (1) without needing to exit from the cabin (22) and move the two machines (1) and (11) to remain in the proximity of one another during the filling.

6. Set according to any one of claims 1 to 5, **characterized in that** the filling vehicle (11) is a crawler crane.

7. Set according to any one of claims 1 to 6, **characterized in that** the shear press is sized so as to be transportable on the road on a vehiclecarrying trailer.

8. Working method for processing scrap metal (5) stored on a site (14) for collecting scrap metal by using a set according to any one of claims 1 to 7, wherein the remote control (23) is used by the operator of the filling vehicle (11) to control the movements and the operation of the shear press (1) as needed,
the method comprising the following steps:
- of providing a storage zone (16) with the scrap metal (5) to be processed;
- of proceeding cyclically with the:
- movement of the shear press (1) in the storage zone or along the storage zone (16) in the range of the filling vehicle (11);
- filling of the tray (4) of the shear press (1) with the scrap metal (5) to be processed using the filling vehicle (11);
- making the shear press (1) operate to process the scrap metal (5) filled in the tray (4) and to release the processed scrap metal (5') through the outlet (7);
- movement of the shear press (1) for the processing of a next pile of scrap metal (5) to be processed by leaving in place the processed scrap metal (5') released from the tray (4).

9. Method according to claim 8, **characterized in that** the site (14) is organized such that the scrap metal (5) to be processed is piled up in a storage zone (16) along a curved line path (B) and which is followed by the shear press (1) and the filling vehicle (11) during the cyclical processing of the scrap metal, the shear press (1) moving towards the front, while the outlet (7) is directed towards the rear, and **in that**:
a) initially, the shear press (1) is positioned at the start of the curved line path (B) with the filling vehicle (11) in the proximity, to take the scrap metal (5) to be processed and to fill the tray (4) of the shear press (1);
b) the shear press (1) is then switched on to perform a processing cycle to cut and compress the content of the tray (4) which, at the end of the cycle of the shear press (1), is discharged through the outlet behind the shear press (1);
c) then, the shear press (1) and the filling vehicle (11) are moved along the curved line path (B) for another filling and another cycle of the shear press (1) to cut and compact the scrap metal.

10. Method according to claim 8 or 9, **characterized in that** the curved line path (B) is followed by the shear press (1) from a starting point close to an access (15) to the site (14) to an arrival point close to this access (15).

11. Method according to any one of claims 8 to 10, **characterized in that** the remote control (23) is used by the operator of the filling vehicle (11) to move the shear press (1) after each processing cycle of the shear press (1) in order to be able to start the filling of the shear press (1) with another quantity of scrap metal (5) to be processed for another cycle of the shear press (1).

12. Method according to any one of claims 8 to 11, **characterized in that** the remote control (23) is used by the operator of the filling vehicle (11) to start and stop the operation of the shear press (1).

13. Method according to any one of claims 8 to 12, **characterized in that** the operator works alone.

14. Method according to any one of claims 8 to 13, wherein the operator works from an elevated cabin (22) of the filling vehicle (11), in order to have a good view over the filling of the shear press (1).

15. Method according to claim 14, wherein the remote control (23) is mounted in or brought into the cabin (22), such that the operator is able to control the operations of the shear press (1) and move the two machines (1) and (11) to remain in the proximity of one another during the filling.
